# EUROPÄISCHE PATENTSCHRIFT

(11) **EP 0 962 118 B1**
(45) Veröffentlichungstag und Bekanntmachung des Hinweises auf die Patenterteilung: **14.04.2004**
(21) Anmeldenummer: 98910625.7
(22) Anmeldetag: 12.02.1998
(51) Int. Cl.: H04Q 11/04, H04Q 11/00, H04B 10/00, G02B 6/42, H04L 12/56

(54) **KOPPELANORDNUNG FÜR EIN BREITBAND-KOMMUNIKATIONSSYSTEM**
COUPLING SYSTEM FOR A BROADBAND COMMUNICATION SYSTEM
SYSTEME DE COUPLAGE POUR SYSTEME DE COMMUNICATION A LARGE BANDE

(30) Priorität: 18.02.1997 DE 19706280
(43) Veröffentlichungstag der Anmeldung: 08.12.1999
(73) Patentinhaber: SIEMENS AKTIENGESELLSCHAFT, 80333 München (DE)
(72) Erfinder: BRAND, Uwe, D-81829 München (DE); BURGHARDT, Hartmut, D-83607 Holzkirchen (DE); KESSLER, Jochen, D-82008 Unterhaching (DE); NEUNER, Thomas, D-81479 München (DE); STEINHAUSER, Karl-August, D-81545 München (DE); ZELLERHOFF, Thomas, D-81371 München (DE)
(86) Internationale Anmeldenummer: PCT/DE1998/000408
(87) Internationale Veröffentlichungsnummer: WO 1998/037726

(56) Entgegenhaltungen:
- EP-A- 0 086 434
- FISCHER W ET AL: "A SCALABLE ATM SWITCHING SYSTEM ARCHITECTURE" IEEE JOURNAL ON SELECTED AREAS IN COMMUNICATIONS, Bd. 9, Nr. 8, 1.Oktober 1991, Seiten 1299-1307, XP000267581
- YOSHIMITSU ARAI ET AL: "MULTIGIGABIT MULTICHANNEL OPTICAL INTERCONNECTION MODULES FOR ASYNCHRONOUS TRANSFER MODE SWITCHING SYSTEMS" PROCEEDINGS OF THE ELECTRONIC COMPONENTS AND TECHNOLOGY CONFERENCE, ORLANDO, JUNE 1 - 4, 1993, Nr. CONF. 43, 1.Juni 1993, INSTITUTE OF ELECTRICAL AND ELECTRONICS ENGINEERS, Seiten 825-830, XP000380085
- YUSUKE OTA ET AL: "MULTICHANNEL PARALLEL DATA LINK FOR OPTICAL COMMUNICATION" IEEE LCS. THE MAGAZINE OF LIGHTWAVE COMMUNICATION SYSTEMS, Bd. 2, Nr. 2, 1.Mai 1991, Seiten 24-32, XP000208323
- SHIGEKI HINO ET AL: "ASYNCHRONOUS TRANSFER MODE SWITCHING LSI CHIPS WITH 10-GB/S SERIAL I/O PORTS" IEEE JOURNAL OF SOLID-STATE CIRCUITS, Bd. 30, Nr. 4, 1.April 1995, Seiten 348-352, XP000506437

## Beschreibung

Die Erfindung betrifft eine Koppelanordnung für ein der Übertragung von digitalen Datensignalen dienendes Breitband-Kommunikationssystem, wobei die Koppelanordnung derart ausgebildet ist, daß diese aus einzelnen Koppelelementen aufgebaut ist, daß diese Koppelelemente jeweils eine Mehrzahl von Eingängen sowie eine gegenüber diesen geringere Anzahl von Ausgängen aufweisen und daß die Koppelelmente durch ihre Verbindung untereinander zumindest einen mehrstufigen Trichter bilden. Eine solche Koppelanordnung ist bereits aus EP-B1-0 086 434 bekannt.

In Fischer W. et al., "A Scalable ATM Switching System Architecture", IEEE Journal on selected areas of communications, Bd. 9, Nr. 8, 01.10.1991, S. 1299 - 1307 ist ein Koppelanordnung für ein digitales Breitband-Kommunikationssystem offenbart, bei dem die Koppelanordnung derart ausgebildet ist, daß diese aus einzelnen Koppelelementen aufgebaut ist, daß diese Koppelelemente jeweils eine Mehrzahl von Eingängen sowie eine gegenüber diesen geringere Anzahl von Ausgängen aufweisen, daß die Koppelelmente durch ihre Verbindung untereinander zumindest einen mehrstufigen Trichter bilden und daß der Schnitt für die Baugruppen der Koppelanordnung so gewählt ist, daß auf jeder der Baugruppen vier vollständige Trichter untergebracht sind.

Bei der Realisierung solcher Kommunikationssysteme ist man bestrebt, die einzelnen Systemkomponenten, so auch Koppelanordnungen, mit möglichst geringem Aufwand zu realisieren, was indessen in der Praxis der Realisierung von Breitband-Koppelanordnungen mit zunehmender geforderter Durchsatzrate sowie zunehmender Anzahl von Eingangsleitungen und Ausgangsleitungen auf Schwierigkeiten stößt. Bei einer angenommenenen Trichterstruktur für die Koppelanordnung kann beispielsweise, von einem gewählten Datendurchsatz der verwendeten Bauelemente und Baugruppen ausgehend, der Aufwand mehr als quadratisch ansteigen, wenn man mit denselben Bauelementen durch entsprechendes Verschalten die Koppelanordnung vergrößern will.

In Yoshimitsu Arai et al., "Multigigabit Multichannel Optical Interconnection Modules for Asynchronous Transfer Mode Switching Systems", Proceedings of the Electronic Components and Technology Conference, Nr. Conf. 43, 01.06.1993, IEEE, S. 825-830 ist hierzu offenbart, daß mehrere Baugruppen mit Hilfe von Glasfaserverbindungen miteinander verbunden werden, über die Informationen mit hoher Bandbreite, hoher Signaldichte, niedriger Dämpfung und unbeeinflußt von elektromagnetischen Störungen optisch übermittelt werden. Durch den zusätzlichen Einsatz von Multiplexern kann hierbei die Anzahl der externen Verbindungen einer Baugruppe reduziert werden.

Es ist nun Aufgabe der vorliegenden Erfindung, einen Weg zu zeigen, um eine Koppelanordnung der eingangs genannten Art mit wirtschaftlich tragbaren Kosten realisieren zu können.

Diese Aufgabe wird bei einer Koppelanordnung der eingangs genannten Art durch die im Patentanspruch 1 angegebenen Merkmale gelöst.

Die Erfindung bringt dabei den Vorteil mit sich, daß innerhalb des Kommunikationssystems die Übertragung von Daten- und Taktsignalen lediglich innerhalb der jeweiligen Koppelanordnung elektrisch erfolgt. Dagegen geschieht die externe Signalübertragung zu bzw. von der jeweiligen Koppelanordnung im Multiplexbetrieb über optische Verbindungsleitungen. Auf diese Weise kann auf den Baugruppen die Anzahl der physikalischen Stecker-Schnittstellen für die Übertragung von Datensignalen und Taktsignalen stark reduziert werden. So wären beispielsweise bei einem in der Koppelanordnung verwendeten Trichter der Struktur 64/8, mit 64 Eingangsports, 8 Ausgangsports und 10 Leitungen pro Port im Hinblick auf die verwendete Technologie der elektrischen Bauelemente, bei einer reinen elektrischen Version 720 (640+80) elektrische Stecker für Signaleingänge und Signalausgänge erforderlich. Dagegen reduziert sich diese Anzahl auf 72 optische Steckerstellen (Glasfaserübergänge), wenn pro Port die angenommenen 10 Leitungen optisch gemultiplext werden, d.h bei dem angenommenen Beispiels erfolgt eine Steckerstellen-Reduzierung von 10:1.

Vorteilhafte Ausgestaltungen der vorliegenden Erfindung ergeben sich aus den Patentansprüchen 2 bis 9.

Im folgenden wird nun die vorliegende Erfindung anhand von Zeichnungen beispielsweise erläutert.
- FIG 1: zeigt den schematischen Aufbau eines mehrstufigen Trichters,
- FIG 2: zeigt den schematischen Aufbau eines verkürzten, mehrstufigen Trichters,
- FIG 3: zeigt schematisch die Anordnung verkoppelter Leitungen auf einer Baugruppen-Leiterplatte und
- FIG 4: zeigt ausschnittweise eine aus mehreren Trichtern aufgebaute Koppelanordnung

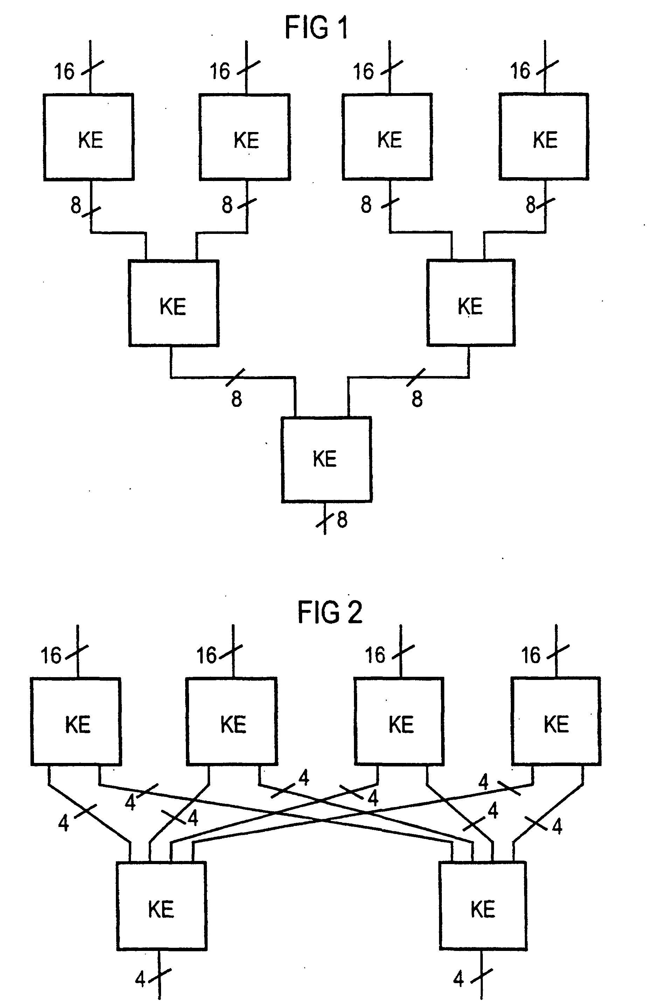

In FIG 1 ist eine mehrstufige Trichterstruktur dargestellt, wie sie in Breitband-Kommunikationssystemen Anwendung findet. Ein Beispiel für ein solches Breitband-Kommunikationssystem ist ein nach dem asynchronen Transfermodus (ATM) arbeitendes Vermittlungssystem.

Der mehrstufige Trichter ist als Beispiel dreistufig unter Verwendung von Koppelelementen KE mit jeweils einer Struktur von 16/8 mit 16 Eingangsports, 8 Ausgangsports und 10 Leitungen pro Port ausgebildet. In der ersten Stufe befinden sich 4 Koppelelemente (16/8). Die 8 Ausgangsports von jeweils zwei Koppelelementen dieser ersten Stufe sind auf die 16 Eingangsports eines weiteren Koppelelementes geführt. Daraus resultieren zwei zuätzliche Koppelelemente, die eine zweite Stufe des Trichters bilden. Schließlich sind die 16 Ausgangsports (2x8) der beiden Koppelelemente der zweiten Stufe an die 16 Eingangsports eines eine dritte Stufe und damit den Ausgang des Trichters bildenden Koppelelementes angeschlossen. Mit dieser Trichterstruktur, die insgesamt aus 7 Koppelelementen aufgebaut ist, sind also 64 Eingangsports und 8 Ausgangsports realisierbar, woraus sich bei den oben angegebenen 10 Leitungen pro Port insgesamt 640 Eingangsleitungen und 80 Ausgangsleitungen ergeben. Durch eine Parallelschaltung von 8 solchen Trichtern der Struktur 64/8 kann beispielsweise eine Koppelanordnung der Struktur 64/64 gebildet werden, d.h. eine Koppelanordnung mit 640 Eingangsleitungen und 640 Ausgangsleitungen. Mit 7 Koppelelementen pro Trichter sind also insgesamt 56 Koppelelemente für die angenommene Koppelanordnung 64/64 erforderlich.

In FIG 2 ist ein alternativ ausgebildeter Trichter dargestellt, der jedoch lediglich aus zwei Stufen aufgebaut ist. Auch dieser Trichter verfügt zunächst in einer ersten Stufe über vier Koppelelemente KE der zuvor angegebenen Struktur 16/8. Die Ausgangsstufe des Trichters bilden zwei Koppelelmente der Struktur 16/4 bzw. der Struktur 16/8, wobei bei letzterem von den 8 Ausgangsports des jeweiligen Koppelelementes lediglich vier Ausgangsports benutzt sind. Von den einzelnen Koppelelementen der ersten Stufe sind jeweils vier Ausgangsports auf die 16 Eingangsports eines der beiden Koppelelemente der Ausgangstufe geführt. Die verbleibenden vier Ausgangsports jedes der Koppelelemente KE der ersten Stufe sind mit den 16 Eingangsports des übrigen Koppelelementes der Ausgangsstufe verbunden. Bei dieser gegenüber der in Fig 1 wiedergegebenen Trichterstruktur verkürzten Trichterstruktur sind ebenfalls 64 Eingangsports und 8 Ausgangsports realisierbar, woraus sich bei den oben angegebenen 10 Leitungen pro Port auch hier insgesamt 640 Eingangsleitungen und 80 Ausgangsleitungen ergeben. Durch eine Parallelschaltung von 8 solchen verkürzten Trichtern der Struktur 64/8 kann, wie bereits für den Trichter nach FIG 1 erwähnt, beispielsweise eine Koppelanordnung der Struktur 64/64 gebildet werden, d.h. eine Koppelanordnung mit 640 Eingangsleitungen und 640 Ausgangsleitungen. Ein Unterschied zwischen den beiden gerade erläuterten Trichtern besteht lediglich in der Anzahl der pro Trichter erforderlichen Koppelelemente. So sind für den Trichter nach FIG 1 7 Koppelelemente erforderlich, während der verkürzte Trichter nach FIG 2 mit 6 Koppelelementen auskommt. Für eine Koppelanordnung der Struktur 64/64 sind also bei Verwendung von Trichtern nach FIG 1 insgesamt 56 Koppelelemente erforderlich. Bei Verwendung von verkürzten Trichtern nach FIG 2 reduziert sich die Anzahl an Koppelelementen auf 48, was bei großen Koppelanordnungen zu einer erheblichen Bauelemente-Einsparung führt.

Bisherige ATM-Koppelanordnungen waren beispielsweise auf Durchsatzraten von bis zu 20 Gbit/s ausgelegt. Die Datenrate pro Port innerhalb einer ATM-Koppelanordnung betrug z.B. ca. 207 Mbit/s, welche mit ATM1 bezeichnet ist. Diese Datenrate ist gegenüber der Datenrate auf externen Eingangsleitungen und Ausgangsleitungen um den Faktor 4/3 erhöht, da für eine Signalübertragung innerhalb einer ATM-Koppelanordnung ein bestimmter, den Signalen (Nachrichtenzellen) jeweils beizufügender "Overhead" erforderlich ist. Eine daraus resultierende Datenrate (Nettodatenrate) ergibt sich zu ca. 155 Mbit/s und wird z.B. mit STM1 bezeichnet.

Die Koppelanordnung nach dem vorliegenden Ausführungsbeispiel soll bezüglich folgender Kriterien optimiert sein:
- hohe Vermittlungsleistung oder Datendurchsatz, z.B. 160 Gbit/s
- geringes Volumen,
- geringe Kosten (geringe Elemente- und Baugruppenvielfalt, wenige Baugruppen),
- Erweiterbarkeit auch über 160 Gbit/s hinaus,
- Möglichkeit einer flächenmäßig verteilten Unterbringung.

Aufgrund der vorstehend erläuterten Trichterstrukturen steigt, von einem gewählten Datendurchsatz der verwendeten Bauelemente und Baugruppen ausgehend, der Aufwand mehr als quadratisch, wenn man mit denselben Bauelementen durch entsprechendes Verschalten die Gesamtkoppelanordnung vergrößern will. Deshalb ist es notwendig, sowohl für das einzelne Koppelelement als auch für den Baugruppenschnitt die technisch maximal realisierbare Datendurchsatzrate zu erzielen.

Die Basis hierfür bilden Koppelelemente 16/8 in CMOS-Technik mit einer Koppelfunktion von 16 Eingangsports auf 8 Ausgangsports mit jeweils 10 Leitungen pro Port. Dies ergibt 240 hochbitratige Ein/Ausgänge mit einer physikalischen Datenrate von 830Mbit/s pro Portleitung. D.h. die gesamte Datenrate pro Port beträgt 3.3Gbit/s, was auch als ATM16 bezeichnet ist.

Dies entspricht, wie bereits vorstehend erläutert, einer.um den Faktor 3/4 reduzierten Nettobitrate von 2,4 Gbit/s (auch als STM16 bezeichnet).

Basierend auf diesen Koppelelementen, ist bei dem Ausführungsbeispiel eine Koppelanordnung mit 64 Eingänge auf 64 Ausgänge realisiert (entspricht einem Nettodurchsatz von 160 Gbit/s), wobei man hierfür unter Verwendung einer Trichterstruktur nach FIG 1 insgesamt 56 Koppelelemente benötigt. Diese Struktur ist jedoch unter Realisierung eines "verkürzten" Trichters nach FIG 2 auf 48 Koppelelemente reduziert.

Wie bereits vorstehend angegeben, bildet jeder Trichter eine Koppelanordnung mit 64 Eingangsports auf 8 Ausgangsports. Für die komplette Koppelanordnung werden 8 Trichter eingangsseitig parallelgeschaltet.

Der Baugruppenschnitt ist bei dem vorliegenden Ausführungsbeispiel, um möglichst viele Schnittstellen zwischen den einzelnen Baugruppen (und damit Aufwand für die Verbindungstechnik) einzusparen, so gewählt, daß sich zumindest ein kompletter verkürzter Trichter der Struktur 64/8 (6 Koppelelemente bei einem Trichter nach FIG 2) auf einer Baugruppe befindet. Da mit einem Trichter pro Baugruppe die Zahl der notwendigen Eingangsleitungen und Ausgangsleitungen mit 720 Einzeladern bei weitem alle bisher verfügbaren elektrischen Steckersysteme sprengen würde, ist hier ein Konzept mit optischer Verbindungstechnik verwendet und damit die Zahl der Steckstellen mit unidirektionalen elektrisch/optischen bzw. optisch/elektrischen Wandlern (OML, "Optisches Multiplexer Link") auf realisierbare Werte von 72 optischen Ein-/Ausgängen über die Baugruppengrenze reduziert.

Dabei werden mit einem elektrisch/optischen Wandler OML-S jeweils die auf einem Port auftretenden Signale- ein Port besteht dabei aus 4 differentiellen Datenleitungen und einer zugehörigen differentiellen Taktleitung- in einen seriellen Bitstrom gemultiplext und elektrooptisch gewandelt bzw. in umgekehrter Richtung mit einem optisch/elektrischen Wandler OML-E rückgewandelt. Das jeweilige optische Signal weist dabei eine Datenrate von 3,3 Gbit/s auf, was 830 Mbit/s auf den vier differentiellen Datenleitungen entspricht. Damit wird die Zahl der physikalischen Steckstellen von 720 elektrischen Stiften auf 72 Glasfaserübergänge reduziert. Um die Zahl von 72 OML-S und OML-E auf einer Baugruppe unterbringen zu können, ist bei dem vorliegenden Ausführungsbeispiel ein bisher verwendetes Baugruppenformat auf die doppelte Höhe erweitert. Mit 8 solchen Baugruppen könnte eine Koppelanordnung 64/64 unter Verwendung von insgesamt 576 OML (OML-S und OML-E)aufgebaut werden. Die Zahl von 576 resultiert aus 8x(64 OML-E + 8 OML-S).

Der Nutzungsgrad der Fläche auf den doppelt hohen Baugruppen ist durch eine spezielle Aufbauweise für die elektro/optischen bzw. optisch/elektrischen Wandler OML-S bzw. OML-E) weiter erhöht.

Die Wandler-Module (OML-S und OML-E) werden auf der Längskante stehend in Kantenstecksockel montiert. Die Leiterplatte der Wandler-Module werden dabei mit "Pads" versehen und direkt in einen Sockel gesteckt. Die Montage über Stecksockel hat dabei den Vorteil, daß die Wandler-Module mit den empfindlichen Glasfasern nicht während eines Löt-Prozesses, beispielsweise während eines Reflow-Prozesses, thermisch belastet werden. Der Platzbedarf pro Wandler-Modul wird durch die stehende Aufbauweise minimiert. Ein Tausch von Wandler-Moduln ist damit einfacher durchzuführen. Darüber hinaus können HF-Signale bei dieser Steckerausführung in Streifenleitertechnik ohne größere Verzerrungen übertragen werden.

Aufgrund dieser Platzoptimierung ist es möglich, einen kompletten zweiten verkürzten Trichter (6 Koppelelemente) auf einer Baugruppe unterzubringen. Um beide Trichter ansteuern zu können, ist die Anzahl der elektrisch/optischen-Wandler lediglich um 8 zu erhöhen (8xOML-S). Die beiden Trichter 64/8 werden zu beiden Seiten der Leiterplatte der Baugruppe angeordnet und damit eingangsseitig elektrisch parallelgeschaltet. Somit können mit den beiden Trichtern gleichzeitig die 64 optisch/elektrischen Wandler (OML-E) bedient werden, was systemseitig eine enorme Einsparung an Komponenten und damit Kosten, Verlustleistung, etc. bedeutet. Die Ausgänge der beiden Trichter werden mit jeweils 8 elektrisch/optischen Wandlern verbunden. Damit kann nun mit vier statt wie vorher mit 8 Baugruppen eine Koppelanordnung der Struktur 64/64 unter Verwendung von insgesamt lediglich 320 elektro/optischen bzw. optisch/elektrischen Wandlern(256 OML-E und 64 OML-S) aufgebaut werden.

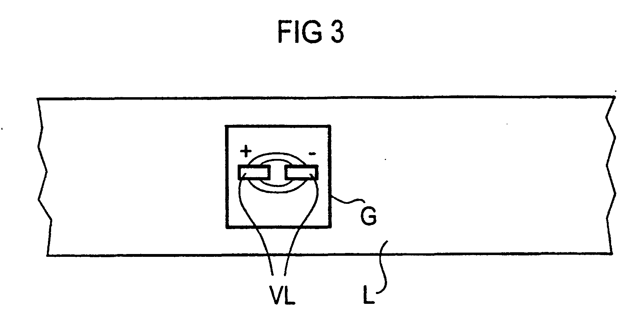

Die Leiterplattentechnik ist ebenfalls im Hinblick auf die Zahl von ca. 2000 830-Mbit/s-Verbindungen verbessert. Durch geeignete Plazierung der Bauelemente auf der jeweiligen Baugruppen-Leiterplatte ist eine gleichmäßige Ausnutzung der Verdrahtungsflächen der einzelnen Lagen erzielt und damit eine einfache Entflechtungstruktur ermöglicht. Durch Verwendung verschiedener partieller Durchkontaktierungstypen wurde die Plazierung der insgesamt ca. 1100 Bauteile sowie die gesamte Entflechtung erleichtert bzw ermöglicht. Durch Verwendung von verkoppelten Leitungen für die oben erwähnten differentiellen Datenleitungen konnte die notwendige Verdrahtungsfläche halbiert werden. Die einzelnen verkoppelten differentiellen Datenleitungen sowie die zugehörige verkoppelte differentielle Taktleitung sind dafür auf der Leiterplatte jeweils in einer gesonderten Gasse als verkoppelte Triplate-Leitungen geführt. Dabei sind die in einer Gasse geführten verkoppelten Leitungen gleichlängen geroutet, wobei die Gasse für die differentielle Taktleitung zwischen den Gassen der vier differentiellen Datenleitungen verläuft. Das Prinzip der Gassenbildung ist in FIG 3 schematisch dargestellt. Dabei ist mit L eine mehrlagige Leiterplatte angedeutet. Eine innerhalb dieser Leiterplatte geführte Gasse ist mit G bezeichnet.

Dabei sind innerhalb dieser Gasse die beiden verkoppelten Triplate-Leitungen VL und das zwischen diesen ausgebildete elektro-magnetische Feld skizziert.

Durch die Anwendung der genannten Maßnahmen kann die Lagenzahl einer Leiterplatte so weit reduziert werden, daß kleinst mögliche Durchkontaktierungen verwendbar sind, was sich im Hinblick auf die hochfrequenztechnischen Aspekte besonders positiv auswirkt. Insbesondere werden Signalverzerrungen reduziert.

Da die Baugruppe komplett mit funktionalen Bauelementen bestückt ist, ist bei dem vorliegenden Ausführungsbeispiel die Spannungsversorgung in Form von DC-DC-Wandlern auf eigenen Baugruppen untergebracht. Dabei ist jeder Koppelbaugruppe eine Spannungswandler-Baugruppe zugeordnet.

Um die vorstehend beschriebene Koppelanordnung mit weiteren Systemkomponenten zu verbinden, sind zusätzlich Multiplex/Demultiplex-Einrichtungen (Baugruppen) vorgesehen. Diese fassen pro Multiplex/Demultiplex-Baugruppe jeweils 32 ATM1-Kanäle zu 2 ATM16-Kanälen zusammen und sind über die optischen Leitungen (Links) OML-E und OML-S mit den Koppelbaugruppen verbunden. Durch die optische Verbindungstechnik können die Multiplexerbaugruppen bei Bedarf auch entfernt (250m standardmäßig, bis zu etlichen km erweiterbar) beispielsweise an beliebiger Stelle eines Vermittlungsamtes untergebracht werden. Dabei können erhebliche Kabelkosten für die Verbindung zwischen Peripherie und Multiplexer gespart werden. Die Parallelschaltung der Koppelbaugruppen erfolgt durch optische Splitter.

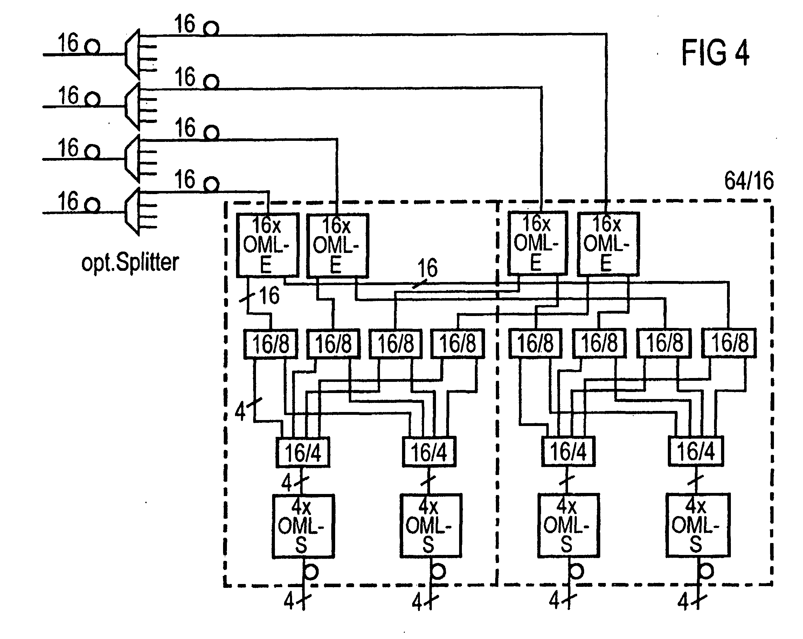

In FIG 4 ist eine Koppelbaugruppe BG der Struktur 64/16 dargestellt, auf welcher zwei mit T1 und T2 bezeichnete Trichter untergebracht sind. Jeder der beiden Trichter ist als oben beschriebener verkürzter Trichter (FIG 2) ausgebildet. Dabei weisen die vier Koppelelemente der ersten Stufe des jeweiligen Trichters eine Struktur von 16/8 auf (wie zuvor bereits erwähnt mit 16 Eingangsports, 8 Ausgangsports und mit 10 Leitungen pro Port).In entsprechender Weise sind nach FIG 2 in einer Ausgangsstufe des jeweiligen verkürzten Trichters zwei Koppelelemente der Struktur 16/4 bzw. 16/8 (hiervon jedoch lediglich vier Ausgangsports benutzt) vorgesehen.

Als Baugruppen-Schnittstellen zu anderen Systemkomponenten ist zu jedem der 64 Eingangsports ein optisch/elektrischer Wandler OML-E vorgesehen. Über diese 64 optisch/elektrischen Wandler sind die 64 elektrischen Eingangsports (pro Port 10 Leitungen) parallelgeschaltet.

Auf der optischen Empfangsseite sind als Beispiel vier optische Splitter vorgesehen, die jeweils über vier Ausgänge mit jeweils 16 optischen Anschlüssen verfügen. Mit jedem der 16 optischen Anschlüsse eines Ausgangs der einzelnen optischen Splitter ist ein zuvor erwähnter optisch/elektrischer Wandler (OML-E) der in FIG 4 dargestellten Baugruppe verbunden.

Die in FIG 4 nicht belegten drei Ausgänge der vier optischen Splitter sind in nicht dagestellter Weise benutzt, um über diese Ausgänge drei weitere Koppelbaugruppen BG 64/16 in entsprechender Weise anzuschließen. Damit entsteht dann eine Koppelanordnung mit einer Struktur von 64/64.

Die zwei Koppelelemente (16/4) in der Ausgangstufe der beiden verkürzten Trichter nach FIG 4 verfügen jeweils über vier Ausgangsports, an welche jeweils ein elektrisch/optischer Wandler OML-S angeschlossen ist.

## Patentansprüche

1. Koppelanordnung für ein der Übertragung von digitalen Datensignalen dienendes Breitband-Kommunikationssystem, wobei die Koppelanordnung derart ausgebildet ist,
- daß diese aus einzelnen Koppelelementen (KE) aufgebaut ist,
- daß diese Koppelelemente jeweils eine Mehrzahl von Eingängen sowie eine gegenüber diesen geringere Anzahl von Ausgängen aufweisen,
- daß die Koppelelmente durch ihre Verbindung untereinander zumindest einen mehrstufigen Trichter bilden, und
- daß der Schnitt für die Baugruppen der Koppelanordnung so gewählt ist, daß auf jeder der Baugruppen zumindest zwei vollständige Trichter untergebracht sind,
**dadurch gekennzeichnet,**
**daß** jeweils zwei Trichter damit elektrisch parallel geschaltet sind, daß zu beiden Seiten der Leiterplatte der jeweiligen Baugruppe einer der jeweils zwei Trichter angeordnet ist.

2. Koppelanordnung nach Anspruch 1,
**dadurch gekennzeichnet,**
**daß** die jeweilige Baugruppe an ihren externen Dateneingängen mit unidirektional ausgelegten optisch / elektrischen Wandlern (OML-E) sowie an ihren externen Datenausgängen mit unidirektional ausgelegten elektrisch / optischen Wandlern (OML-S) versehen ist.

3. Koppelanordnung nach Anspruch 2,
**dadurch gekennzeichnet,**
**daß** die zumindest zwei Trichter eingangsseitig nach den optisch / elektrischen Wandlern (OML-E) elektrisch parallelgeschaltet sind.

4. Koppelanordnung nach einem der Ansprüche 1 bis 3,
**dadurch gekennzeichnet,**
**daß** der jeweilige elektrisch/optischen Wandler (OML-S) derart ausgebildet ist, daß auf einer Leitungs-Gruppe von differentiellen Datenleitungen und einer diesen zugeordneten differentiellen Taktleitung auftretende Datensignale bzw. Taktsignale zunächst zu einem elektrischen, seriellen Multiplexsignal zusammengefaßt werden, welches anschließend elektrooptisch gewandelt wird,
und **daß** der jeweilige optisch/elektrischen Wandler (OML-E) derart ausgebildet ist, daß ein optisches, serielles Multiplexsignal in eine Mehrzahl elektrischer Datensignale und ein diesen zugeordnetes Taktsignal umgewandelt wird und diese Datensignale sowie das Taktsignal über eine der zuvor genannten Leitungs-Gruppe entsprechende Leitungs-Gruppe differentieller Datenleitungen und einer differentiellen Taktleitung weitergeleitet werden.

5. Koppelanordnung nach Anspruch 4,
**dadurch gekennzeichnet,**
**daß** auf der Leiterplatte der jeweiligen Baugruppe die einzelnen differentiellen Datenleitungen sowie die zugeordnete differentielle Taktleitung jeweils als differentielles Leitungs-Pärchen verkoppelter Leitungen ausgebildet sind.

6. Koppelanordnung nach Anspruch 5,
**dadurch gekennzeichnet,**
**daß** das jeweilige differentielle Leitungs-Pärchen auf der Leiterplatte als verkoppelte Triplate-Leitungen ausgebildet ist.

7. Koppelanordnung nach Anspruch 5 oder 6,
**dadurch gekennzeichnet,**
**daß** sämtliche Leitungs-Pärchen einer Leitungs-Gruppe gleich lang sind.

8. Koppelanordnung nach einem der Ansprüche 1 bis 7,
**dadurch gekennzeichnet,**
**daß** die optisch/elektrischen Wandler (OML-E) und elektrisch/optischen Wandler (OML-S) als Wandler-Module ausgebildet sind
und **daß** die Wandler-Module auf der Längskante der jeweiligen Baugruppe stehend in Kantenstecksockeln montiert sind.

9. Koppelanordnung nach einem der Ansprüche 1 bis 8,
**dadurch gekennzeichnet,**
**daß** die optisch/elektrischen Wandler (OML-E) und elektrisch/optischen Wandler (OML-S) über zugehörige optischen Leitungen mit Multiplex/Demultiplex-Einrichtungen verbunden sind.

## Claims

1. Coupling arrangement for a broadband communication system intended for the transmission of digital data signals, where the coupling arrangement is formed such that
- it comprises individual switching elements (KE),
- these switching elements each has a plurality of inputs and a smaller number of corresponding outputs,
- the switching elements are interconnected in such a way that they form at least one multi-stage funnel, and
- the section for the modules of the coupling arrangement is selected so that at least two complete funnels are accommodated on each of the modules,
**characterized in that**
two funnels are connected electrically in parallel so that one of the two funnels is arranged on both sides of the pc board of the relevant module.

2. Coupling arrangement in accordance with Claim 1,
**characterized in that**
the relevant module is provided at its external data inputs with unidirectional optical/electrical converters (OML-E) and at its external data outputs with unidirectional electrical/optical converters (OML-S).

3. Coupling arrangement in accordance with Claim 2,
**characterized in that**
the at least two funnels are connected electrically in parallel on the input side after the optical/electrical converters (OML-E).

4. Coupling arrangement in accordance with one of the Claims 1 to 3,
**characterized in that**
the relevant electrical/optical converter (OML-S) is designed such that data signals or clock signals occurring on a line group of differential data lines and a differential clock line associated with them are first combined to form an electrical serial multiplex signal which is then converted electro-optically,
and the relevant optical/electrical converter(OML-E) is designed such that an optical serial multiplex signal is converted into a plurality of electrical data signals and an associated clock signal and these data signals and clock signal are forwarded via a line group, corresponding to the above mentioned line group, of differential data lines and a differential clock line.

5. Coupling arrangement in accordance with Claim 4,
**characterized in that**
the individual differential data lines and the associated differential clock line are designed as differential pairs of coupled lines on the pc board of the relevant module.

6. Coupling arrangement in accordance with Claim 5,
**characterized in that**
the differential line pair on the pc board is designed as coupled triplate lines.

7. Coupling arrangement in accordance with Claim 5 or 6,
**characterized in that**
all the line pairs of a line group are of the same length.

8. Coupling arrangement in accordance with one of the Claims 1 to 7,
**characterized in that**
the optical/electrical converters (OML-E) and electrical/optical converters (OML-S) are designed as converter modules
and that the converter modules are mounted in a standing arrangement in edge sockets on the long edge of the relevant module.

9. Coupling arrangement in accordance with one of the Claims 1 to 8,
**characterized in that**
the optical/electrical converters (OML-E) and electrical/optical converters (OML-S) are connected via associated optical lines with multiplexer/demultiplexer equipment.

## Revendications

1. Système de couplage pour un système de communication à large bande servant à la transmission de signaux de données numériques, ledit système de couplage étant configuré de manière telle que
- il est construit à partir de différents éléments de couplage (KE),
- lesdits éléments de couplage présentent respectivement une pluralité d'entrées ainsi qu'un nombre comparativement moindre de sorties,
- les éléments de couplage constituent, du fait de leur interconnexion, au moins un entonnoir multi-étagé et
- la coupe pour les groupes du système de couplage est sélectionnée de manière telle qu'au moins deux entonnoirs complets sont placés sur chacun des groupes,
**caractérisé en ce que** respectivement deux entonnoirs sont montés électriquement en parallèle du fait qu'un des respectivement deux entonnoirs est placé de part et d'autre de la carte de circuit imprimé du groupe respectif.

2. Système de couplage selon la revendication 1, **caractérisé en ce que** le groupe respectif est pourvu de convertisseurs optique / électrique de conception unidirectionnelle (OML-E) en ses entrées externes de données ainsi que de convertisseurs électrique / optique de conception unidirectionnelle (OML-S) en ses sorties externes de données.

3. Système de couplage selon la revendication 2, **caractérisé en ce que** les au moins deux entonnoirs sont montés électriquement en parallèle côté entrée en aval des convertisseurs optique / électrique (OML-E).

4. Système de couplage selon l'une des revendications 1 à 3, **caractérisé en ce que** le convertisseur électrique / optique (OML-S) respectif est configuré de manière telle que des signaux de données resp. des signaux de synchronisation survenant sur un groupe de lignes composé de lignes de données différentielles et d'une ligne de synchronisation différentielle y associée sont tout d'abord regroupés en un signal électrique sériel de multiplexage, lequel est ensuite converti électro-optiquement, et **en ce que** le convertisseur optique / électrique (OML-E) respectif est configuré de manière telle qu'un signal de multiplexage optique sériel est converti en une pluralité de signaux de données électriques et en un signal de synchronisation y associé et que lesdits signaux de données ainsi que ledit signal de synchronisation sont transmis par l'intermédiaire d'un groupe de lignes composé de lignes de données différentielles correspondant au groupe de lignes mentionné ci-avant et d'une ligne de synchronisation différentielle.

5. Système de couplage selon la revendication 4, **caractérisé en ce que** les différentes lignes de données différentielles ainsi que la ligne de synchronisation différentielle y associée sont respectivement configurées comme couples de lignes différentielles consistant en lignes couplées sur la carte de circuit imprimé du groupe respectif.

6. Système de couplage selon la revendication 5, **caractérisé en ce que** le couple de lignes différentielles respectif sur la carte de circuit imprimé est configuré comme lignes triplaques couplées.

7. Système de couplage selon la revendication 5 ou 6, **caractérisé en ce que** tous les couples de lignes d'un groupe de lignes sont de même longueur.

8. Système de couplage selon l'une des revendications 1 à 7, **caractérisé en ce que** le convertisseur optique / électrique (OML-E) et le convertisseur électrique 1 optique (OML-S) sont configurés comme modules convertisseurs et **en ce que** les modules convertisseurs sont montés debout dans des socles enfichables sur l'arête sur l'arête longitudinale du groupe respectif.

9. Système de couplage selon l'une des revendications 1 à 8, **caractérisé en ce que** le convertisseur optique / électrique (OML-E) et le convertisseur électrique / optique (OML-S) sont connectés à des dispositifs de multiplexage / démultiplexage par l'intermédiaire de lignes optiques y associées.
